# EUROPEAN PATENT APPLICATION

(11) **EP 2 447 824 A1**
(43) Date of publication of application: **02.05.2012**
(21) Application number: 11178428.6
(22) Date of filing: 23.08.2011
(51) Int. Cl.: G06F 3/06, H04L 29/08, G06F 11/20

(54) **Data remote synchronization system**

(30) Priority: 29.10.2010 TW 099137326
(71) Applicant: OSAN Technology Inc., Neihu Taipei (TW)
(72) Inventor: Cheng, Chung-Cheng, 100 Taipei City (TW)
(74) Representative: Becker Kurig Straus

(57) **Abstract**

A data synchronization system includes a receiver and a transmitter. The receiver includes a remote storage circuit, first remote controller, and second remote controller. The transmitter includes a local storage circuit and a local controller. In response to local volume information corresponding to the local storage circuit, the controller establishes a main communication link and a redundant communication link respectively connected to the first remote and the second remote controllers. When the first remote controller operates normally, the data synchronization takes place between the receiver and the transmitter via the main communication link. When the first remote controller operates abnormally, the second remote controller takes the operation of the first remote controller for controlling the receiver, so that the data synchronization takes place between the receiver and the transmitter via the redundant communication link.

## Description

This application claims the benefit of Taiwan application Serial No. 099137326, filed Oct. 29, 2010, the subject matter of which is incorporated herein by reference.

### BACKGROUND OF THE INVENTION

### Field of the Invention

The invention relates in general to a data synchronization system, and more particularly to a data synchronization system whose transmitter and receiver both including dual controllers.

### Description of the Related Art

With the rapid advance in science and technology nowadays, data remote synchronization system has been provided and widely used in various fields of application. In general, the data synchronization system includes a transmitter and a receiver. The transmitter and the receiver are connected via a network transmission path via which the transmitter can synchronize the stored data to the receiver. However, how to design a data remote synchronization system capable of providing data remote synchronization function even when the controller at any side of the transmitter or the receiver to assure the stability of the remote synchronization system is broken has become one of the prominent tasks for the industries.

### SUMMARY OF THE INVENTION

The invention is directed to a data remote synchronization system. Compared to the conventional data remote synchronization system, the receiver circuit and the transmitter circuit of the data remote synchronization system of the invention both support redundancy function and have the advantage of providing stable data remote synchronization function.

According to a first aspect of the present invention, a data synchronization system including a receiver and a transmitter is provided. The receiver includes a remote storage circuit, a first remote and a second remote controller, coupled to the remote storage circuit. The transmitter includes a first local storage circuit and a first local controller. The first local controller controls access of the data stored in the first local storage circuit. In response to the first local volume information corresponding to the first local storage circuit, the first local controller enters a main control mode to establish a first main communication link and a first redundant communication link respectively connected to the first remote controller and the second remote controller. When the first remote controller operates normally, the receiver and the transmitter are connected by the first main communication link to perform data transmission for enabling the first local controller to have the first data synchronized to the receiver. When the first remote controller operates abnormally, the second remote controller takes the operation of the first remote controller, so that data transmission to take place between the receiver and the transmitter perform via the second remote communication link for enabling the first local controller to have the first data synchronized to the receiver.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 shows a block diagram of a remote synchronization system according to an embodiment of the invention;

FIG. 2 shows another block diagram of a remote synchronization system according to an embodiment of the invention; and

FIG. 3 shows a detailed block diagram of the receiver 10 of FIG. 1.

### DETAILED DESCRIPTION OF THE INVENTION

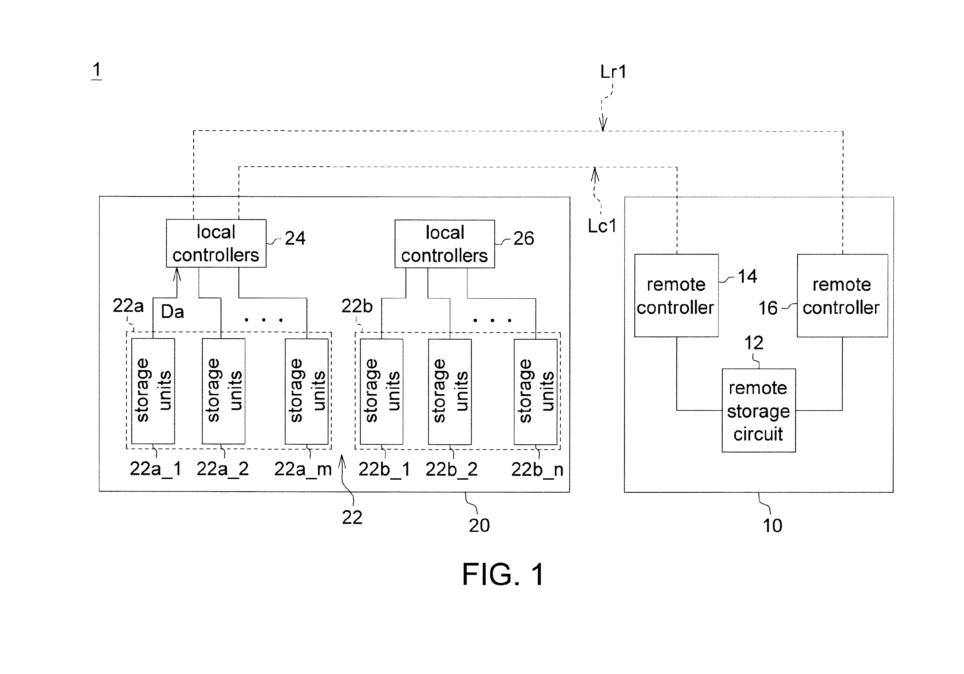

Referring to FIG. 1, a block diagram of a remote synchronization system according to an embodiment of the invention is shown. The remote synchronization system 1 includes a receiver 10 and a transmitter 20. For example, the remote synchronization system 1 is conformed to redundant array of inexpensive disks (RAID) or conformed to the network attached storage (NAS) protocols. The receiver 10 includes a remote storage circuit 12, a remote controller 14 and a remote controller 16.

The transmitter 20 includes a storage device 22, and local controllers 24 and 26. The storage device 22 includes a local storage circuit 22a, which further includes m storage units 22a1, 22a2, ..., 22a_m, wherein m is a natural number.

The local controller 24 controls access of the data stored in local storage circuit 22a. When the user would like to have the data stored in the local storage circuit 22a synchronized, the user sets the first local volume information of the to-be-synchronized data to determine which storage unit to synchronize. The first local volume information further drives the controller which controls access of the data stored in the to-be-synchronized storage unit to enter a main control mode for related data transmission.

For example, when the user would like to have the data Da stored in the storage unit 22a_1 synchronized, the user sets the first local volume information corresponding to the storage unit 22a_1 and determines the storage unit 22a_1 as the storage unit for data synchronization. The first local volume information further correspondingly drives the local controller 24 (that is, the controller controls the access of the data stored in the storage unit 22a_1) to enter a main control mode so as to establish a main communication link Lc1 and a redundant communication link Lr1 respectively connected to the remote controller 14 and the remote controller 16. For example, the local controller 24 determines which communication link is the main communication link and which communication link is the redundant communication link according to the establishment order of the communication links. In an operation example, the communication link connecting the local controller 24 and the remote controller 14 is established earlier than the communication link connecting the local controller 24 and the remote controller 16. Therefore, the communication link connecting the local controller 24 and the remote controller 14 is used as the main communication link Lc1, and the communication link connecting the local controller 24 and the remote controller 16 is used as the redundant communication link Lr1.

When the remote controller 14 operates normally, data transmission takes place between the receiver 10 and the transmitter 20 via the main communication link Lc1 for enabling the local controller 24 to correspondingly synchronize the data Da to the receiver 10 via the main communication link Lc1.

When the remote controller 14 operates abnormally (such as system shutdown), the remote controller 16 takes the operation of remote controller 14 for controlling the receiver 10. In other words, the remote controller 16 becomes the main control circuit which performs data synchronization at the receiver and takes all operation of the receiver 10. Thus, data transmission takes place between the receiver 10 and the transmitter 20 via the redundant communication link Lr1 for enabling the local controller 24 to correspondingly synchronize data Da to the receiver 10 via the redundant communication link Lr1.

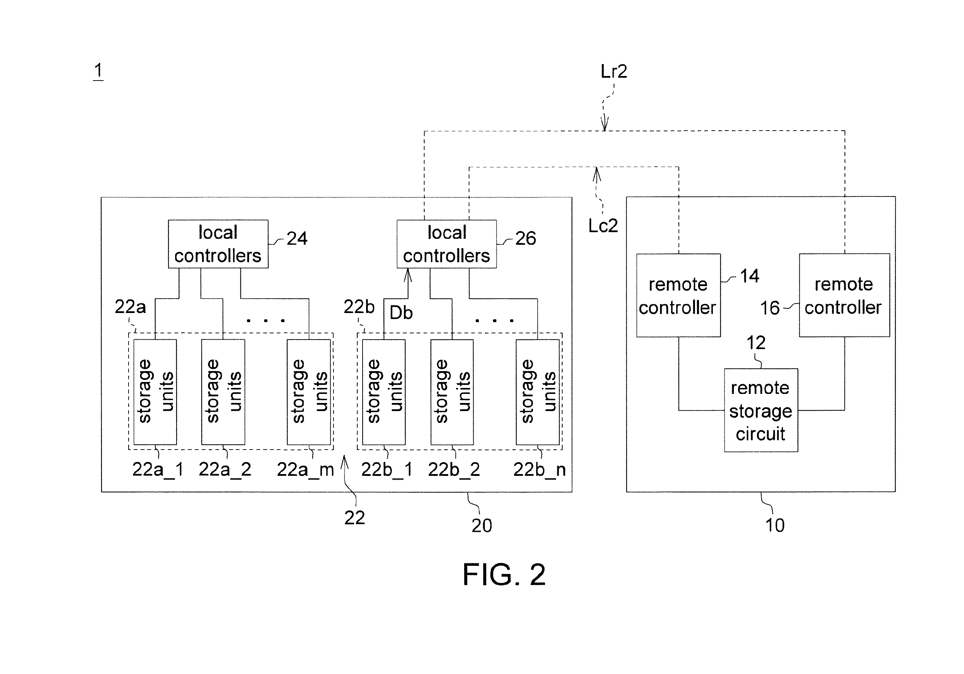

In the present embodiment of the invention, the transmitter 20 further includes a local storage circuit 22b and a local controller 26. The local storage circuit 22b such as includes n storage units 22b_1, 22b_2, ... , 22b_n, wherein n is a natural number. The local controller 26 controls the access of the data stored in the local storage circuit 22b. When the user would like to have the data stored in the local storage circuit 22b synchronized, the user sets the second local volume information of the to-be-synchronized data to determine which storage unit to synchronize. The local volume information further correspondingly drives the local controller 26 to enter a main control mode and establish a main communication link Lc2 and a redundant communication link Lr2 respectively connected to the remote controller 14 and the remote controller 16 as illustrated in FIG. 2.

For example, when the user would like to have the data Db stored in the storage unit 22b_1 synchronized, the user sets the second local volume information corresponding to the storage unit 22b_1 and determines the storage unit 22b_1 as the storage unit for data synchronization. The second local volume information further correspondingly drives the local controller 26 (that is, the controller controls the access of the data stored in the storage unit 22b_1) to enter a main control mode and establish a main communication link Lc2 and a redundant communication link Lr2 respectively connected to remote controller 14 and the remote controller 16.

When remote controller 14 operates normally, data transmission takes place between the receiver 10 and the transmitter 20 via the main communication link Lc2 for enabling the local controller 26 to correspondingly synchronize data Db to the receiver 10 via the main communication link Lc2.

When the remote controller 14 operates abnormally (such as system shutdown), the remote controller 16 takes the operation of remote controller 14 for controlling the receiver 10. In other words, the remote controller 16 takes all operations of the receiver 10 and becomes the main control circuit which performs data synchronization to the receiver. Thus, data transmission takes place between the receiver 10 and the transmitter 20 via the redundant communication link Lr2 for enabling the local controller 26 to correspondingly synchronize data Db to the receiver 10 via the redundant communication link Lr2.

In the above operation examples of the present embodiment of the invention, the transmitter 20 includes local controllers 24 and 26, which respectively control the access of the data stored in the local storage circuits 22a and 22b. Thus, when data synchronization is to be performed on the storage units of the local storage circuits 22a and 22b, the local controllers 24 and 26 respectively operate in a main control mode and execute data transmission corresponding to the transmitter 20. Thus, the transmitter 20 of the present embodiment of the invention can distribute the workload of accessing the storage unit to two local controllers 24 and 26. In other words, by setting the corresponding disposition between the local controllers 24 and 26 and the storage units 22a_1∼22a_m and 22b_1∼22b_n, the I/O signal loading on the local controllers 24 and 26 and the storage unit 22a_1∼22a_m and 22b_1∼22b_n is distributed to two local controllers 24 and 26 to avoid the I/O signal loading on one single controller being too large. In an operation example, the numeric values m and n are substantially equal. In other words, the local controllers 24 and 26 substantially share the same amount of the I/O signal loading.

In the above operation examples of the present embodiment of the invention, the local controllers 24 and 26 respectively operate in a main control mode when data synchronization is to be performed on corresponding storage units of the local storage circuits 22a and 22b, respectively. However, the local controllers 24 and 26 of the present embodiment of the invention are not limited to such exemplification. In other examples, the local controllers 24 and 26 can further support controller with redundancy function. In greater details, when the local controller 24 operates abnormally (such as system shutdown), the local controller 26 takes all operations of the local controller 24 for controlling the access of the local storage circuits 22a and 22b. In other words, when the local controller 24 operates abnormally, the local controller 26 still enters a main control mode to control the access of the data stored in the said storage unit despite that the storage unit to which data synchronization is to be performed corresponds to the local controller 24.

Likewise, when the local controller 26 operates abnormally, the local controller 24 takes all operations of the local controller 26 for controlling the access of the local storage circuits 22a and 22b. In other words, when the local controller 26 operates abnormally, the local controller 24 still enters a main control mode to control the access of the data stored in the said storage unit despite that the storage unit to which data synchronization is to be performed corresponds to the local controller 26.

The local controller 24 and 26 such as includes a data synchronization module and a scheduling module. The data synchronization module is for synchronizing the data stored in the transmitter 20 to the receiver 10 via corresponding main communication links Lc1 and Lc2 and redundant communication links Lr1 and Lr2. For example, the data synchronization modules of the local controller 24 and 26 perform the above data synchronization by way of snapshot.

The scheduling modules of the local controllers 24 and 26 determine whether the data volume stored in the local storage circuits are larger than a threshold. If yes, then the scheduling module drives the data synchronization module to have the data stored in the transmitter 20 synchronized to the receiver 10.

For example, the data synchronization module and the scheduling module of the local controllers 24 and 26 can be realized by programming codes, and the local controllers 24 and 26 implement the operations related to the data synchronization module and the scheduling module by executing corresponding programming codes.

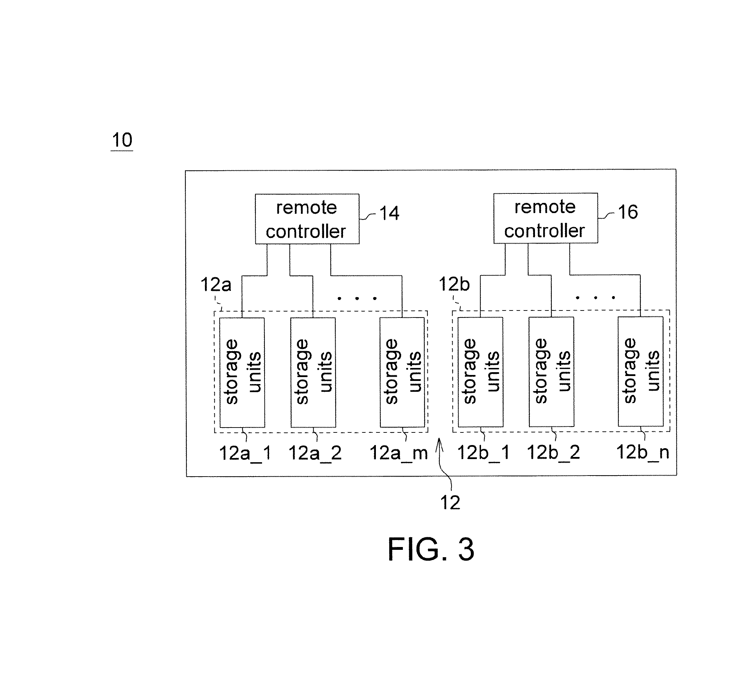

Referring to FIG. 3, a detailed block diagram of the receiver 10 of FIG. 1 is shown. Like the transmitter 20, the remote storage circuit 12 of the receiver 10 includes two storage devices 12a and 12b, respectively including multiple storage units 12a_1, 12a_2, ..., 12a_s and 12b_1, 12b_2, ..., 12b_t, wherein s and t are natural numbers.

The remote synchronization system of the present embodiment of the invention includes a transmitter with dual controllers and a receiver with dual controllers. The receiver of the present embodiment of the invention, according to the volume information of the storage unit to which data synchronization is to be performed, selectively drives one of the dual controllers to enter a main control mode and establish a main communication link and a redundant communication link which are respectively connected to the two controllers of the receiver. Compared to conventional data remote synchronization system, the receiver circuit of the related data remote synchronization system of the invention supports redundancy function, and has the advantages of providing stable function for data remote synchronization and sharing the I/O signal loading via the dual controllers of the transmitter circuit.

Also, in some of the embodiments, another controller not operated in the main control mode is used as a remote controller. Compared to conventional data remote synchronization system, the transmitter circuit of the related data remote synchronization system of the invention supports redundancy function, and also has the advantage of providing stable function for data remote synchronization.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A data synchronization system, comprising:
a receiver, comprising:
a remote storage circuit;
a first remote controller and a second remote controller, coupled to the remote storage circuit; and
a transmitter, comprising:
a first local storage circuit; and
a first local controller used for controlling data access of the data stored in the first local storage circuit, wherein in response to a first local volume information corresponding to the first local storage circuit, the first local controller enters a main control mode and establishes a first remote communication link and a second remote communication link respectively connected to the first remote controller and the second remote controller;
wherein, when the first remote controller operates normally, the receiver and the transmitter are connected by the first main communication link to perform data transmission, thereby the first local controller have the first data synchronized to the receiver;
wherein, when the first remote controller operates abnormally, the second remote controller takes the operation of the first remote controller for controlling the receiver so that data transmission takes place between the receiver and the transmitter via the first redundant communication link for enabling the first local controller to have the first data synchronized to the receiver.

2. The data synchronization system according to claim 1, wherein the transmitter further comprising:
a second local storage circuit; and
a second local controller used for controlling access of the data stored in the second local storage circuit, wherein, in response to a second local volume information corresponding to the second local storage circuit, the second local controller enters the main control mode to establish a second main communication link and a second redundant communication link respectively connected to the first remote controller and the second remote controller;
wherein, when the first remote controller operates normally, data transmission takes place between the receiver and the transmitter via the second main communication link for enabling the second local controller to have the second data synchronized to the receiver;
wherein, when the first remote controller operates abnormally, the second remote controller takes the operation of the first remote controller for controlling the receiver, so that data transmission takes place between the receiver and the transmitter via the second redundant communication link for enabling the second local controller to have the second data synchronized to the receiver.

3. The data synchronization system according to claim 2, wherein when the first local controller operates abnormally, the second local controller takes the operation of the first local controller for controlling access of the first storage unit and the second storage unit.

4. The data synchronization system according to claim 2, wherein the second local controller comprising:
a data synchronization module used for synchronizing the second data stored in the second local storage unit to the receiver via one of the second main communication link and the second redundant communication link.

5. The data synchronization system according to claim 4, wherein the data synchronization module synchronizes the data to the receiver by way of snapshot.

6. The data synchronization system according to claim 4, wherein the second local controller further comprising:
a scheduling module used for determining whether the data volume stored in the second local storage circuit are larger than a threshold, wherein when the data volume stored in the second local storage circuit are larger than the threshold, the scheduling module drives the data synchronization module to have the second data stored in the second local storage circuit synchronized to the receiver.

7. The data synchronization system according to claim 1, wherein the first local controller comprising:
a data synchronization module used for synchronizing the first data stored in the first local storage circuit to the receiver via one of the first main communication link and the first redundant communication link,.

8. The data synchronization system according to claim 7, wherein the data synchronization module synchronizes the first data to the receiver by way of snapshot.

9. The data synchronization system according to claim 7, wherein the first local controller further comprising:
a scheduling module used for determining whether the data volume stored in the first local storage circuit are larger than a threshold, wherein when the data volume stored in the first local storage circuit are larger than the threshold, the scheduling module drives the data synchronization module to have the first data stored in the first local storage circuit synchronized to the receiver.
